# EUROPEAN PATENT SPECIFICATION

(11) **EP 3 613 574 B1**
(45) Date of publication and mention of the grant of the patent: **31.08.2022**
(21) Application number: 17906262.5
(22) Date of filing: 21.04.2017
(51) Int. Cl.: B30B 9/00, B30B 9/26, B30B 9/16, B01D 33/29, B01D 33/80

(54) **MULTI-SHAFT LAMINATED SPIRAL SOLID-LIQUID SEPARATOR WITH PENDULUM MOTION**
MEHRWELLIGER LAMINIERTER SPIRALFÖRMIGER FEST-FLÜSSIG-ABSCHEIDER MIT PENDELBEWEGUNG
SÉPARATEUR SOLIDE-LIQUIDE EN SPIRALE STRATIFIÉ À ARBRES MULTIPLES AVEC MOUVEMENT PENDULAIRE

(43) Date of publication of application: 26.02.2020
(73) Proprietor: Wu, Yunping, Fuzhou, Fujian 350000 (CN)
(72) Inventor: Wu, Yunping, Fuzhou, Fujian 350000 (CN)
(74) Representative: Keil & Schaafhausen Patentanwälte PartGmbB
(86) International application number: PCT/CN2017/081348
(87) International publication number: WO 2018/191929

(56) References cited:
- EP-A1- 1 052 007
- WO-A1-2012/101980
- CN-A- 1 736 695
- CN-A- 101 333 060
- CN-A- 102 941 208
- CN-A- 103 920 323
- CN-A- 105 601 076
- CN-A- 105 999 800
- CN-U- 205 730 534
- DE-A1- 3 032 598
- FR-A1- 2 892 657

## Description

### BACKGROUND OF THE INVENTION

### 1. Technical field

The present invention relates to the technical field of solid-liquid separation equipment, and in particular, to a multi-shaft laminated spiral solid-liquid separator with a pendulum motion.

### 2. Background

Chinese invention patent No. 200780018706.9 discloses a laminated spiral solid-liquid separator, which includes: a solid-liquid separation part provided with multiple adjacent fixed rings and multiple movable rings disposed between the adjacent fixed rings; and at least one screw extending through the solid-liquid separation part. The movable rings are designed to be driven by the rotating screw, in such a manner that the filtrate from a processed object entering the solid-liquid separation part is drained out of the solid-liquid separation part while the processed object is moved towards an outlet of the solid-liquid separation part. For this laminated spiral solid-liquid separator, the contact between the movable rings and a screw shaft leads to abrasion therebetween.

Chinese invention patent No. 200810043376.5 discloses a novel spiral solid-liquid separator, where movable rings are eccentrically driven by an eccentric shaft to avoid abrasion between the movable rings and the screw shaft. However, for a drive manner using such a structure, deformation easily occurs since no extra support part is provided on the eccentric shaft. Even worse, a large machine cannot be driven due to high load bearing. In addition, a drive rod for driving the movable rings easily deforms and bends.

Chinese invention patent No. 200510054707.1 discloses an antiwear laminated spiral solid-liquid separator, where fixed rings and movable rings are arranged in tiers to jointly form a cavity structure, and a screw shaft passes through the cavity structure. The movable rings are driven up and down by an external driver, but can only move around the periphery of the screw shaft. During processing of high-fiber-content sludge which easily hardens, the materials easily accumulate on the screw shaft and cannot be propelled smoothly, reducing the processing capacity and easily causing overload or a machine failure. Moreover, no effective moisture is separated from the sludge near the shaft center and drained out of a channel, failing to reduce its moisture content.

Chinese invention patent No. 200510054707.1 discloses a solid-liquid separator with two screw shafts. However, in this machine, a cover is provided around the upper portions of the screw shafts, and a movable plate or fixed plate is provided on their lower portions. The movable plate contacts the screw shafts, which inevitably causes abrasion.

FR 2 892 657 A1 discloses a material separating device. The device has mobile rings presenting a central opening interposed between adjacent fixed rings, and movable with respect to the fixed rings. Each screw of a screw conveyor is rotating mounted around an axis of rotation across central openings of the fixed and mobile rings. A screw driving device has driving units to drive the rings to move each mobile ring along the periphery of the opening, so that a portion of an inner perimeter of each mobile ring is tangent to a portion of that of each fixed ring, under the control of the driving units.

CN 105 999 800 A provides a laminated screw type solid-liquid separator capable of achieving pendulum type movement. The solid-liquid separator comprises fixed rings, movable rings and a screw shaft, wherein the fixed rings and the movable rings which are arranged in a staggered mode are radially arranged on the screw shaft; the solid-liquid separator further comprises a main drive rod, a secondary drive rod and a positioning rod; the main drive rod is connected with an independent drive motor or connected with the screw shaft through a transmission mechanism; the main drive rod is supported by two or more support devices; the main drive rod is provided with one or more eccentric devices; each eccentric device is connected with the secondary drive rod through a drive sheet; the secondary drive rod is arranged at the lower ends of the movable rings in a sleeving mode to connect all the movable rings into a whole; the upper ends of the movable rings penetrate through the positioning rod, and the movable rings are driven by the positioning rod to do vertical linear movement through a linear guide device and do pendulum type movement following the secondary drive rod simultaneously. The drive rods of the solid-liquid separator are not prone to deform and suitable for drive of large equipment.

### SUMMARY OF THE INVENTION

A technical problem to be solved by the present invention is to provide a multi-shaft laminated spiral solid-liquid separator with a pendulum motion, where a drive rod is less likely to deform and is applicable to a large-scale apparatus.

The present invention is implemented as follows:
A multi-shaft laminated spiral solid-liquid separator with a pendulum motion includes: fixed rings, movable rings and screw shafts, where each of the screw shafts is provided with the fixed rings and the movable rings in a staggered arrangement in a radial direction to form a cavity.

There are two or more screw shafts arranged in the cavity side by side, and the fixed rings and the movable rings are in the form of an annular structure with two rings staggered and communicated or multiple rings staggered and communicated.

The separator further includes a primary drive rod, a secondary drive rod, and a guide rod.

The primary drive rod is connected to an independent drive motor, or is connected to the screw shafts via a transmission mechanism.

The primary drive rod is supported by two or more support devices, and one or more eccentric devices are provided on the primary drive rod.

Each of the eccentric devices is connected to the secondary drive rod via a drive sheet; the secondary drive rod is sleeved in the lower ends of the movable rings and connects all of the movable rings together to form one piece; the guide rod passes through the upper ends of the movable rings and connects all of the movable rings together to form one piece; and the secondary drive rod drives the lower ends of the movable rings to make a pendulum motion while the guide rod drives the movable rings to move up and down by means of one linear guide device.

The transmission mechanism or the drive motor drives the primary drive rod to move, the eccentric devices on the primary drive rod drive the secondary drive rod to move, and the secondary drive rod drives all the movable rings to move.

Further, the primary drive rod is disposed above the guide rod; while being driven by the eccentric devices to move, the primary drive rod drives the guide rod to move up and down and levers, about the guide rod, the secondary drive rod to swing.

Further, the transmission mechanism is a gear transmission mechanism; there are two screw shafts; the screw shafts are driven by the gear transmission mechanism to operate in the same direction; the gear transmission mechanism includes a driving screw shaft gear, a driven screw shaft gear, a transmission gear, and a primary drive rod gear; and the transmission gear engages with the driving screw shaft gear, the driven screw shaft gear, and the primary drive rod gear.

Further, the transmission mechanism is a gear transmission mechanism; there are two screw shafts; the screw shafts are driven by a gear transmission mechanism to operate in reverse directions; the gear transmission mechanism includes a driving screw shaft gear, a driven screw shaft gear, a transmission gear, and a primary drive rod gear; the driving screw shaft gear engages with the transmission gear and the driven screw shaft gear; and the transmission gear further engages with the primary drive rod gear.

The present invention has the following advantages: 1. The present invention uses two or more screw shafts to replace one screw shaft, and blades of the adjacent screw shafts partially overlap. Therefore, during rotation of the screw shafts, materials which easily harden into a block near the shaft centers are rolled, to successively push materials forward. Thus, all the materials are thoroughly and uniformly rolled to the periphery of the cavity, facilitating drainage of moisture. Moreover, the screw shafts are arranged side by side, and the fixed rings and the movable rings cling to the screw shafts on the circumference. Therefore, the whole cavity is flat, and the drainage area at the bottom is widened, thus better facilitating the drainage of moisture. Especially, when the screw shafts operate in reverse directions, the moisture content in the materials which can withstand the stress can be further reduced since the screw blades get close to each other during operation. 2. The primary drive rod of the present invention is arranged outside the solid-liquid separation cavity, and is supported by two or more support devices. Further, the primary drive rod is provided with multiple eccentric devices which drive the movable rings to move. Therefore, abrasion caused by the contact between the movable rings and the screw shafts is avoided, and further a multi-shaft design is made feasible. In addition, such a drive manner fundamentally eliminates occurrence of deformation of the drive rod in the prior art. 3. Gear transmission is applied between shafts to adapt to the increased volume of the cavity, which enhances the processing capacity of each individual shaft by using an energy-efficient method. 4. The primary drive rod is disposed above a water extractor, thus avoiding the eccentric devices and the support devices on the primary drive rod from being frequently immersed in waste water, and facilitating observation of driver operation and maintenance and replacement.

### BRIEF DESCRIPTION OF THE DRAWINGS

The present invention is further described below with reference to the accompanying drawings.
FIG. 1 is a schematic structural illustration of the present invention;
FIG. 2 is a schematic structural illustration of a support plate of the present invention;
FIG. 3 is a schematic structural illustration of a fixed ring of the present invention;
FIG. 4 is a schematic structural illustration of a movable ring of the present invention;
FIG. 5 is a schematic structural illustration of a transmission movable ring of the present invention;
FIG. 6 is a top view when two screw shafts of the present invention operate in the same direction (a primary drive rod is not shown);
FIG. 7 is a schematic structural illustration of a gear transmission mechanism when the two screw shafts of the present invention operate in the same direction;
FIG. 8 is a top view when the two screw shafts of the present invention operate in reverse directions (a primary drive rod is not shown); and
FIG. 9 is a schematic structural diagram of a gear transmission mechanism when the two screw shafts of the present invention operate in reverse directions.

### DETAILED DESCRIPTION OF THE PREFERRED EMBODIMENTS

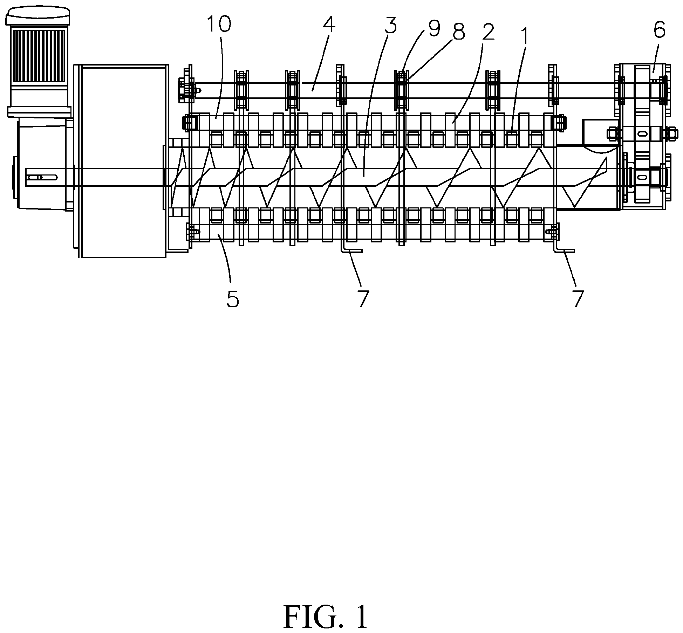

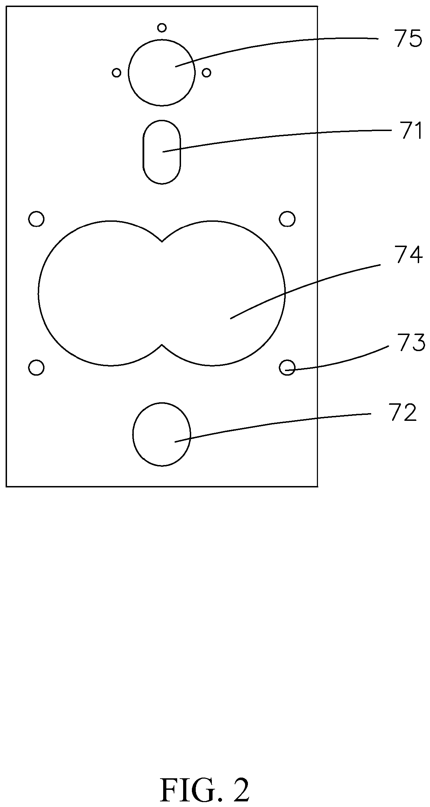

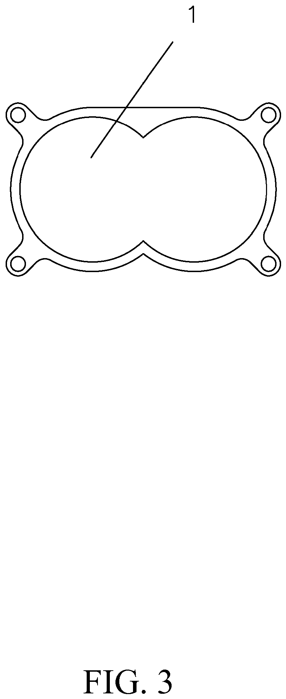

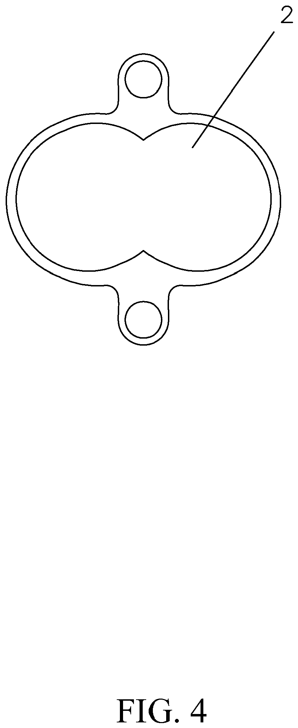

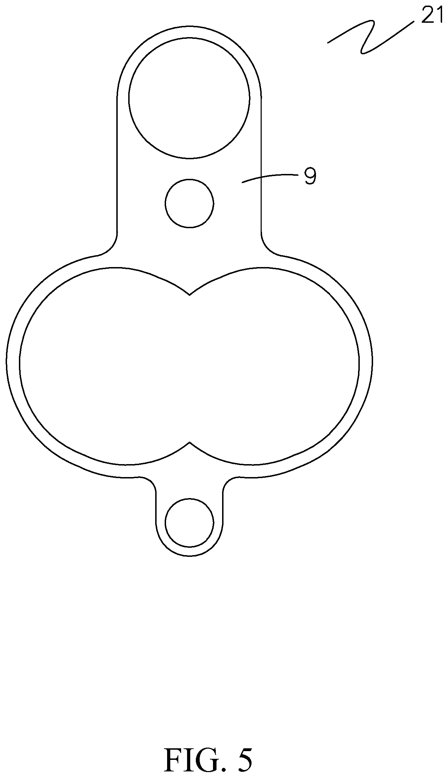

As shown in FIG. 1 to FIG. 5, a multi-shaft laminated spiral solid-liquid separator with a pendulum motion includes fixed rings 1, movable rings 2, and two screw shafts 3 arranged side by side, where each of the screw shafts 3 is provided with the fixed rings 1 and the movable rings 2 in a staggered arrangement in a radial direction to form a cavity.

The separator further includes a primary drive rod 4, a secondary drive rod 5, and a guide rod 10.

The screw shafts 3 are connected to the primary drive rod 4 via a transmission mechanism 6, where the transmission mechanism 6 may use gear transmission, sprocket transmission, or belt transmission. However, the primary drive rod 4 is not necessarily driven by the screw shafts 3, and may also be connected to and driven by an independent drive motor (not shown in the figure).

The primary drive rod 4 is disposed above the cavity and supported by two support plates 7. Four eccentric bearings 8 are provided on the primary drive rod 4 at intervals.

Each of the eccentric bearings 8 is connected to the secondary drive rod 5 via a drive sheet 9. The secondary drive rod 5 is sleeved in the lower ends of the movable rings 2 and connects all of the movable rings 2 together to form one piece. The drive sheets 9 and their corresponding movable rings 2 are integrally connected. The movable ring 2 provided with the drive sheet 9 is referred to as a transmission movable ring 21.

The support plate 7 is provided with a guide device 71, a giving-way hole 72, pillar holes 73 connected to the fixed ring 1, a cavity hole 74 for accommodating a solid-liquid separation part, and a fixing hole 75 for fixing the primary drive rod 4.

The guide rod 10 is sleeved in the upper ends of the movable rings 2 and connects all of the movable rings 2 together to form one piece. The guide rod 10 passes through the guide device 71 on the support plate 7. The guide device 71 is a linear hole, and is used to give way to the guide rod 10 to make a linear motion. The secondary drive rod 5 passes through the giving-way hole 72 on the support plate 7, and the giving-way hole 72 is used to give way to the secondary drive rod 5 to make a pendulum motion. The fixing hole 75 is used for fixing the primary drive rod 4.

The screw shafts 3 drive the primary drive rod 4 to move via the transmission mechanism 6, the eccentric bearings 8 on the primary drive rod 4 drive the transmission movable rings 21 to move, and the transmission movable rings 21 drive all the movable rings 2 to move via the secondary drive rod 5. Under the effect of the eccentric bearings 8 and the guide devices 71, the guide rod 10 drives the upper ends of all the movable rings 2 to make a linear motion. Under the effect of the eccentric bearings 8 and the giving-way holes 72, the secondary drive rod 5 drives the lower ends of all the movable rings 21 to make a pendulum motion.

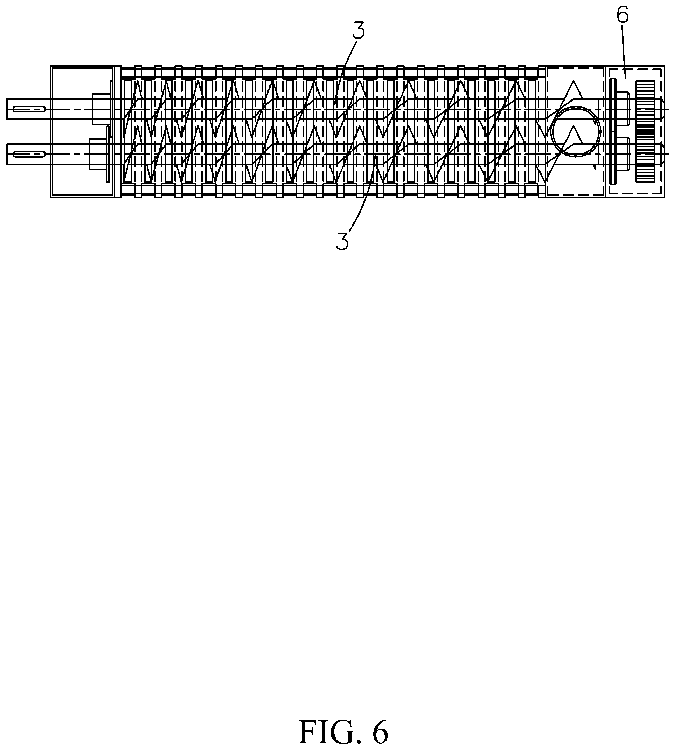

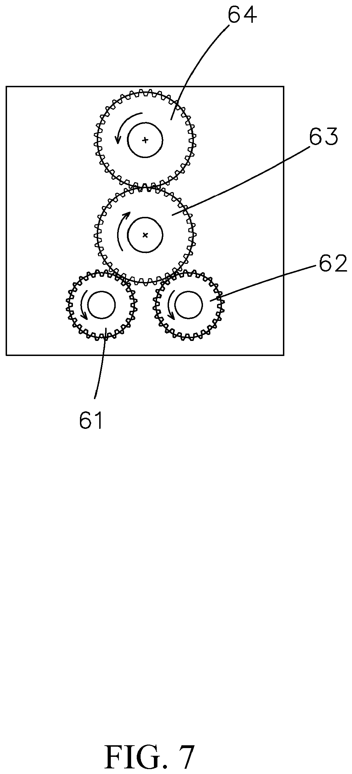

As shown in FIG. 6 and FIG. 7, the two screw shafts 3 are driven by a gear transmission mechanism 6 to operate in the same direction. The gear transmission mechanism 6 includes a driving screw shaft gear 61, a driven screw shaft gear 62, a transmission gear 63, and a primary drive rod gear 64. The transmission gear 63 engages with the driving screw shaft gear 61, the driven screw shaft gear 62, and the primary drive rod gear 64.

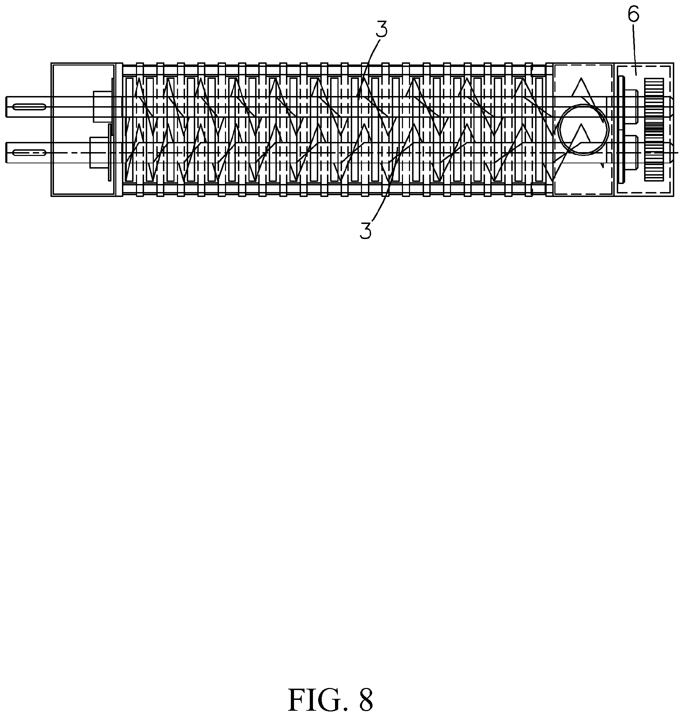

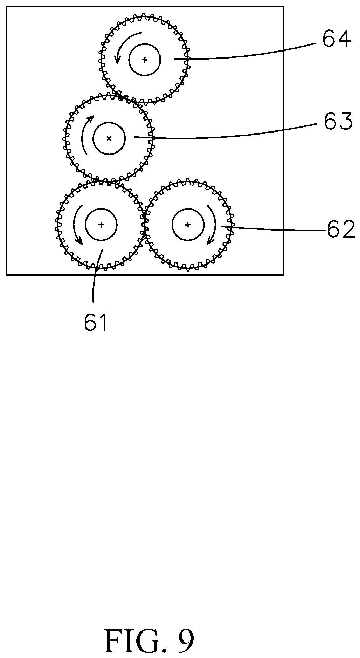

As shown in FIG. 8 and FIG. 9, the two screw shafts 3 are driven by a gear transmission mechanism 6 to operate in reverse directions. The gear transmission mechanism 6 includes a driving screw shaft gear 61, a driven screw shaft gear 62, a transmission gear 63, and a primary drive rod gear 64. The driving screw shaft gear 61 engages with the transmission gear 63 and the driven screw shaft gear 62; and the transmission gear 63 further engages with the primary drive rod gear 64.

The above merely describes preferred embodiments of the present application, but is not intended to limit the protection scope of the present invention, which is defined by the appended claims.

## Claims

1. A multi-shaft laminated spiral solid-liquid separator with a pendulum motion, comprising: fixed rings (1), movable rings (2) and screw shafts (3), wherein each of the screw shafts (3) is provided with the fixed rings (1) and the movable rings (2) in a staggered arrangement in a radial direction to form a cavity;
the two or more screw shafts (3) arranged in the cavity side by side, and the fixed rings (1) and the movable rings (2) are in the form of an annular structure with two rings staggered and communicated or multiple rings staggered and communicated;
the separator further comprises a primary drive rod (4), a secondary drive rod (5), and a guide rod (10), wherein
the primary drive rod (4) is connected to an independent drive motor, or is connected to the screw shafts (3) via a transmission mechanism (6);
the primary drive rod (4) is supported by two or more support devices (7), and one or more eccentric devices (8) are provided on the primary drive rod (4);
each of the eccentric devices (8) is connected to the secondary drive rod (5) via a drive sheet (9); the secondary drive rod (5) is sleeved in the lower ends of the movable rings (2) and connects all of the movable rings (2) together to form one piece; the guide rod (10) passes through the upper ends of the movable rings (2) and connects all of the movable rings (2) together to form one piece; and the secondary drive rod (5) drives the lower ends of the movable rings (2) to make a pendulum motion while the guide rod (10) drives the movable rings (2) to move up and down by means of a linear guide device (71); and
the transmission mechanism (6) or the drive motor drives the primary drive rod (4) to move, the eccentric devices (8) on the primary drive rod (4) drive the secondary drive rod (5) to move, and the secondary drive rod (5) drives all the movable rings (2) to move.

2. The multi-shaft laminated spiral solid-liquid separator with a pendulum motion of claim 1, wherein the primary drive rod (4) is disposed above the guide rod (10); while being driven by the eccentric devices (8) to move, the primary drive rod (4) drives the guide rod (10) to move up and down and levers, about the guide rod (10), the secondary drive rod (5) to swing.

3. The multi-shaft laminated spiral solid-liquid separator with a pendulum motion of claim 1 or 2, wherein the transmission mechanism (6) is a gear transmission mechanism; there are two screw shafts (3); the screw shafts (3) are driven by the gear transmission mechanism to operate in the same direction; the gear transmission mechanism (6) comprises a driving screw shaft gear (61), a driven screw shaft gear (62), a transmission gear (63), and a primary drive rod gear (64); and the transmission gear (63) engages with the driving screw shaft gear (61), the driven screw shaft gear (62), and the primary drive rod gear (64).

4. The multi-shaft laminated spiral solid-liquid separator with a pendulum motion of claim 1 or 2, wherein the transmission mechanism (6) is a gear transmission mechanism; there are two screw shafts (3); the screw shafts (3) are driven by a gear transmission mechanism (6) to operate in reverse directions; the gear transmission mechanism (6) comprises a driving screw shaft gear (61), a driven screw shaft gear (62), a transmission gear (63), and a primary drive rod gear (64); the driving screw shaft gear (61) engages with the transmission gear (63) and the driven screw shaft gear (62); and the transmission gear (63) further engages with the primary drive rod gear (64).

## Patentansprüche

1. Mehrwelliger laminierter spiralförmiger Fest-Flüssig-Abscheider mit Pendelbewegung, aufweisend: feste Ringe (1), bewegliche Ringe (2) und Schraubenwellen (3), wobei an jeder der Schraubenwellen (3) die festen Ringe (1) und die beweglichen Ringe (2) in einer versetzten Anordnung in einer radialen Richtung bereitgestellt sind, um einen Hohlraum zu bilden;
die zwei oder mehr Schraubenwellen (3), welche im Hohlraum nebeneinander angeordnet sind, und die festen Ringe (1) und die beweglichen Ringe (2) die Form einer ringförmigen Struktur aufweisen, wobei zwei Ringe versetzt angeordnet sind und miteinander in Verbindung stehen, oder mehrere Ringe versetzt angeordnet sind und miteinander in Verbindung stehen;
der Abscheider ferner eine primäre Antriebsstange (4), eine sekundäre Antriebsstange (5) und eine Führungsstange (10) aufweist, wobei
die primäre Antriebsstange (4) mit einem unabhängigen Antriebsmotor verbunden ist, oder über einen Übersetzungsmechanismus (6) mit den Schraubenwellen (3) verbunden ist;
die primäre Antriebsstange (4) von zwei oder mehr Stützvorrichtungen (7) gehalten ist, und eine oder mehrere exzentrische Vorrichtungen (8) an der primären Antriebsstange (4) bereitgestellt sind;
jede der exzentrischen Vorrichtungen (8) über ein Antriebsblech (9) mit der sekundären Antriebsstange (5) verbunden ist; die sekundäre Antriebsstange (5) in die unteren Enden der beweglichen Ringe (2) eingesteckt ist und sämtliche beweglichen Ringe (2) miteinander verbindet, um ein einziges Stück zu bilden; die Führungsstange (10) durch die oberen Enden der beweglichen Ringe (2) geführt ist und sämtliche beweglichen Ringe (2) miteinander verbindet, um ein einziges Stück zu bilden; und die sekundäre Antriebsstange (5) die unteren Enden der beweglichen Ringe (2) antreibt, um eine Pendelbewegung zu erzeugen, während die Führungsstange (10) die beweglichen Ringe (2) antreibt, um diese mittels einer Linearführungsvorrichtung (71) nach oben und nach unten zu bewegen; und
der Übersetzungsmechanismus (6) oder der Antriebsmotor eine Bewegung der primären Antriebsstange (4) erzeugt, die exzentrischen Vorrichtungen (8) an der primären Antriebsstange (4) eine Bewegung der sekundären Antriebsstange (5) erzeugen, und die sekundäre Antriebsstange (5) eine Bewegung sämtlicher beweglichen Ringe (2) erzeugt.

2. Mehrwelliger laminierter spiralförmiger Fest-Flüssig-Abscheider mit Pendelbewegung nach Anspruch 1, wobei die primäre Antriebsstange (4) oberhalb der Führungsstange (10) angeordnet ist; während sie durch die exzentrischen Vorrichtungen (8) zur Bewegung angetrieben wird, die primäre Antriebsstange (4) die Führungsstange (10) dazu antreibt, sich nach oben und nach unten zu bewegen und die sekundäre Antriebsstange (5) zum Schwingen um die Führungsstange (10) bringt.

3. Mehrwelliger laminierter spiralförmiger Fest-Flüssig-Abscheider mit Pendelbewegung nach Anspruch 1 oder 2, wobei der Übersetzungsmechanismus (6) ein Zahnradübersetzungsmechanismus ist; zwei Schraubenwellen (3) angeordnet sind; die Schraubenwellen (3) durch den Zahnradübersetzungsmechanismus derart angetrieben sind, dass sie in dieselbe Richtung wirken; der Zahnradübersetzungsmechanismus (6) eine antreibendes Schraubenwellenzahnrad (61), ein angetriebenes Schraubenwellenzahnrad (62), ein Übersetzungszahnrad (63) und ein primäres Antriebsstangenzahnrad (64) aufweist; und das Übersetzungszahnrad (63) mit dem antreibenden Schraubenwellenzahnrad (61), dem angetriebenen Schraubenwellenzahnrad (62) und dem primären Antriebsstangenzahnrad (64) in Eingriff steht.

4. Mehrwelliger laminierter spiralförmiger Fest-Flüssig-Abscheider mit Pendelbewegung nach Anspruch 1 oder 2, wobei der Übersetzungsmechanismus (6) ein Zahnradübersetzungsmechanismus ist; zwei Schraubenwellen (3) angeordnet sind; die Schraubenwellen (3) durch einen Zahnradübersetzungsmechanismus (6) derart angetrieben sind, dass sie in entgegengesetzte Richtungen wirken; der Zahnradübersetzungsmechanismus (6) ein antreibendes Schraubenwellenzahnrad (61), ein angetriebenes Schraubenwellenzahnrad (62), ein Übersetzungszahnrad (63) und ein primäres Antriebsstangenzahnrad (64) aufweist; das antreibende Schraubenwellenzahnrad (61) mit dem Übersetzungszahnrad (63) und dem angetriebenen Schraubenwellenzahnrad (62) in Eingriff steht; und das Übersetzungszahnrad (63) ferner mit dem primären Antriebsstangenzahnrad (64) in Eingriff steht.

## Revendications

1. Séparateur solide-liquide en spirale stratifié à arbres multiples avec mouvement pendulaire, comprenant : des anneaux fixes (1), des anneaux mobiles (2) et des arbres à vis (3), chacun des arbres à vis (3) étant pourvu des anneaux fixes (1) et des anneaux mobiles (2) en disposition échelonnée dans un sens radial pour former une cavité ;
les deux arbres à vis ou plus (3) disposés côte à côte dans la cavité, et les anneaux fixes (1) et les anneaux mobiles (2) ayant la forme d'une structure annulaire avec deux anneaux échelonnés et en communication ou des anneaux multiples échelonnés et en communication ;
le séparateur comprenant en outre une tige d'entraînement primaire (4), une tige d'entraînement secondaire (5), et une tige de guidage (10),
la tige d'entraînement primaire (4) étant connectée à un moteur d'entraînement indépendant, ou étant connectée aux arbres à vis (3) via un mécanisme de transmission (6) ;
la tige d'entraînement primaire (4) étant supportée par deux dispositifs support ou plus (7), et un ou plusieurs dispositifs excentriques (8) étant prévus sur la tige d'entraînement primaire (4) ;
chacun des dispositifs excentriques (8) étant connecté à la tige d'entraînement secondaire (5) via une feuille d'entraînement (9) ; la tige d'entraînement secondaire (5) étant emmanchée dans les extrémités inférieures des anneaux mobiles (2) et connectant tous les anneaux mobiles (2) ensemble pour former une pièce ; la tige de guidage (10) passant à travers les extrémités supérieures des anneaux mobiles (2) et connectant tous les anneaux mobiles (2) ensemble pour former une pièce ; et la tige d'entraînement secondaire (5) entraînant les extrémités inférieures des anneaux mobiles (2) pour exécuter un mouvement pendulaire pendant que la tige de guidage (10) entraîne les anneaux mobiles (2) en mouvement vers le haut et vers le bas au moyen d'un dispositif de guidage linéaire (71) ; et
le mécanisme de transmission (6) ou le moteur d'entraînement entraînant la tige d'entraînement primaire (4) en mouvement, les dispositifs excentriques (8) sur la tige d'entraînement primaire (4) entraînant la tige d'entraînement secondaire (5) en mouvement, et la tige d'entraînement secondaire (5) entraînant les anneaux mobiles (2) en mouvement.

2. Séparateur solide-liquide en spirale stratifié à arbres multiples avec mouvement pendulaire selon la revendication 1, dans lequel la tige d'entraînement primaire (4) est disposée au-dessus de la tige de guidage (10) ; tout en étant entraînée par des dispositifs excentriques (8) en mouvement, la tige d'entraînement primaire (4) entraînant la tige de guidage (10) en mouvement vers le haut et vers le bas et faisant levier, autour de la tige de guidage (10), pour faire osciller la tige d'entraînement secondaire (5) .

3. Séparateur solide-liquide en spirale stratifié à arbres multiples avec mouvement pendulaire selon la revendication 1 ou 2, dans lequel le mécanisme de transmission (6) est un mécanisme de transmission à engrenages ; il y a deux arbres à vis (3) ; les arbres à vis (3) sont entraînés par le mécanisme de transmission à engrenages en fonctionnement dans la même direction ; le mécanisme de transmission à engrenages (6) comprenant un engrenage d'arbres à vis meneur (61), un engrenage d'arbre à vis mené (62), un engrenage de transmission (63), et un engrenage de tige d'entraînement primaire (64) ; et l'engrenage de transmission (63) s'engageant dans l'engrenage d'arbre à vis d'entraînement (61), l'engrenage d'arbre à vis mené (62), et l'engrenage de tige d'entraînement primaire (64).

4. Séparateur solide-liquide en spirale stratifié à arbres multiples avec mouvement pendulaire selon la revendication 1 ou 2, dans lequel le mécanisme de transmission (6) est un mécanisme de transmission à engrenages ; il y a deux arbres à vis (3) ; les arbres à vis (3) sont entraînés par un mécanisme de transmission à engrenages (6) en fonctionnement dans des directions inverses ; le mécanisme de transmission à engrenages (6) comprend un engrenage d'arbre à vis meneur (61), un engrenage d'arbre à vis mené (62), un engrenage de transmission (63), et un engrenage de tige d'entraînement primaire (64) ; l'engrenage d'arbre à vis meneur (61) s'engageant dans l'engrenage de transmission (63) et l'engrenage d'arbre à vis mené (62) ; et l'engrenage de transmission (63) s'engageant en outre dans l'engrenage de tige d'entraînement primaire (64).
